# EUROPEAN PATENT SPECIFICATION

(11) **EP 3 393 804 B1**
(45) Date of publication and mention of the grant of the patent: **01.09.2021**
(21) Application number: 16801049.4
(22) Date of filing: 11.11.2016
(51) Int. Cl.: B32B 37/14, B32B 37/30

(54) **PROCESS FOR MANUFACTURING A HOUSEHOLD APPLIANCE COMPONENT**
VERFAHREN ZUR HERSTELLUNG EINER HAUSHALTSGERÄTEKOMPONENTE
PROCÉDÉ POUR FABRIQUER UN COMPOSANT D'APPAREIL DOMESTIQUE

(30) Priority: 22.12.2015 ES 201531882
(43) Date of publication of application: 31.10.2018
(73) Proprietor: BSH Hausgeräte GmbH, 81739 München (DE)
(72) Inventor: ALAMAN AGUILAR, Jorge, 50008 Zaragoza (ES); ALICANTE SANTIAGO, Raquel, 50006 Zaragoza (ES); ALONSO LOZANO, Sergio, 50006 Zaragoza (ES); ESTER SOLA, Francisco Javier, 50001 Zaragoza (ES); GIMENO ASIN, Carlos, 50015 Zaragoza (ES); GIMENO ASIN, Manuel, 50015 Zaragoza (ES); SANCHEZ SOMOLINOS, Carlos, 50010 Zaragoza (ES)
(86) International application number: PCT/IB2016/056785
(87) International publication number: WO 2017/109601

(56) References cited:
- WO-A1-2007/128041
- US-A1- 2013 093 176
- US-A1- 2015 144 613
- US-A1- 2015 151 528

## Description

The invention relates to a process for manufacturing a household appliance component. Furthermore described is a not separately claimed household appliance component, comprising a base element, which at least in parts comprises at least one layer made from a UV-curable composition. Still further described but not separately claimed is a household appliance comprising at least one household appliance component.

Household appliance components comprise a base element or substrate, which is frequently equipped with a coating in order to provide certain optical or functional properties. Such coatings can for example be used to generate surface areas with certain colours and shapes, to achieve different opacities, or to create textures. Further, conductive materials, tensoactive materials, protective films, varnishes and the like may be applied as a coating to the base element, depending on the intended purpose of the household appliance component.

However, the thickness of these coatings or layers is a key factor for decorative coatings as well as for functional coatings. It is thus necessary to adjust the thickness of the coating or layer. For most applications, thick layers are important, for example for protective coatings. The thicker the coating or layer, the better the protection.

In order to provide the base element with a coating, UV-curable compositions are generally used for most applications. US2015144613 discloses a household article such as a glass-ceramic cooktop with layer made from a UV-curable composition and optionally including a light guide structure. Furthermore WO2007128041 discloses a component comprising a glass sheet, a ight guiding core layer and a UV cured PDMS layer which is transparent to UV light. The thickness of the layer can be 20 micron.

UV-curable coatings polymerize when they are exposed to light containing wavelengths in the UV spectrum (approx. 380 nm to 100 nm). In the curing process the composition hardens, achieves its final properties and adheres to the substrate or base element.

One limitation of this technology is that the UV light has to reach the interphase "composition - base element." If the UV light cannot reach the interface between the composition and the base element, this part of the composition is not or at least not sufficiently cured. This leads to bad adhesion and poor properties of the resulting coating or layer. Therefore the maximum layer thickness is limited in order to ensure that UV light can reach the interface between the coating and the base element.

Presently, the only way to avoid this problem is by repeatedly coating and curing several thin layers. Depending on the required thickness of the coating, many cycles are necessary, which leads to a slow and expensive production process. In addition, UV-curable compositions usually have a limited adhesion on already cured layers, which also leads to rather poor layer properties.

Another technical solution comprises repeatedly coating, but only partially curing the individual layers. This solutions, however, requires additional UV lamps with lower power in order to only partially cure the compositions. Further, a compromise has to be found between total curing on the one hand and no or insufficient curing on the other hand. Further it has to be ensured that the final layer system still is entirely or at least sufficiently cured. This also leads to high process costs and complicates the production process.

It is the task of the present invention to provide a process for manufacturing a household appliance component, which allows the creation of UV-cured coatings with improved adhesion even at high layer thicknesses. A further task is to provide a household appliance component comprising a base element, which at least in parts comprises at least one UV-cured coating with improved adhesion even at high layer thicknesses. A further task is to provide a household appliance comprising such a household appliance component.

These tasks are solved by a process according to claim 1 for manufacturing a household appliance component, a household appliance component, and a household appliance, wherein advantageous developments of the process are to be regarded as advantageous developments of the household appliance component and the household appliance and vice versa.

A first aspect of the invention relates to a process for manufacturing a household appliance component. According to the invention, the process comprises at least the steps of providing a base element, generating a light guide structure on the base element, coating at least a part of the light guide structure with an UV-curable composition and at least partially curing the composition by coupling-in UV light into the light guide structure, transmitting said UV light through the light guide structure to the composition, and coupling-out said UV light into the composition. The invention is based on the idea to generate light guiding paths on the base element in a first step and apply the UV-curable composition onto at least a part of the light guiding paths or structure in a second step. The light guide structure then couples-in UV light, transmits the UV light to the composition, and releases or couples out the UV light into the composition, thus curing the coating from the inside, i.e. directly in the interphase region "composition - base element." This makes it possible to coat very thick layers in one step without deteriorating or worsening the coating's adhesion to the base element. By arranging the UV-curable composition directly on top of the light guide structure, a very compact assembly with high quantum efficiency can be established. It may generally also be provided that certain steps of the process are repeated once or several times in order to generate a stacked light guide - layer structure.

In an advantageous development of the invention it is provided that the light guide structure and/or the UV-curable composition are deposited by at least one coating method on the base element, in particular by at least one of spin coating, spray coating, dip coating, serigraphy, and inkjet printing. The light guide structure and/or the UV-curable composition in other words is or are formed as a layer or coating and are deposited or generated by one or more of the above-mentioned methods. Spin coating, dip coating, or serigraphy can for example be advantageously used if a rather large portion of the surface or the entire surface of the base element should be provided with light guiding abilities. On the other hand, inkjet printing can be also used to generate the light guiding layer in a very flexible way by controlled and selected deposition of respective light guiding material in order to guide light along a specific path. Inkjet printing or coating allows for a fast and easy recreation of complex geometries by propelling droplets of a suitable ink onto the surface of the base element of the household appliance component. Also, inkjet printing can be used to precisely adjust the thickness and/or formulation of the UV-curable composition and thus of the resulting coating, optionally even in a location-dependent manner.

In a further advantageous development of the invention it is provided that the light guide structure is generated in the form of a mesh on the base element. Although the light guide structure may generally be designed in any suitable form, the form of a mesh, in particular a rectangular mesh, has the advantage that the UV light can be distributed and coupled-out particularly uniformly into the composition. This leads to a correspondingly uniformly hardened coating with good adherence to the base material.

In a further advantageous development of the invention it is provided that UV light is coupled into at least two or more locations of the light guide structure, in particular into two or more locations spaced around a circumference of the light guide structure. This allows UV light to couple into the light guide structure at different locations. Since the intensity of the coupled-in UV light decreases according to the length and optical characteristics of the light guide structure, the coupling-in at two or more locations allows a more uniform curing of extensive coatings.

In a further advantageous development of the invention it is provided that a surface of the UV-curable composition, which is opposite to the base material, is irradiated with UV light. It is in other words provided that the UV-curable composition is not only irradiated from the inside via the light guide structure, but also from the outside in order to fully cure the composition even if the coating has a very high layer thickness.

In a further advantageous development of the invention it is provided that the light guide structure has a higher refractive index than the base element and/or that the light guide structure is at least partly arranged on a cladding layer and/or at least partly arranged between two cladding layers and/or at least partly embedded in the cladding layer. If the light guide structure has a higher refractive index than adjacent material along its waveguide path, particularly good light guiding properties are achieved. The refractive indices of the light guide and the adjacent material are generally measured at a wavelength of 633 nm and at a temperature of 20 °C. If the light guide structure is deposited over or in contact with a base element made of ceramic glass, which is used for cooktop surfaces, the refractive index n of the light guide structure is for example chosen to be higher than approximately 1.54 (n_{glass}=1.54 at 633 nm). An additional cladding layer can advantageously be used to decrease and/or increase the refractive index of the adjacent material of the light guide structure in order to improve its light guiding properties. For example, the refractive index of a base element made of glass cannot be easily changed or decreased but, by using a cladding layer as an intermediate layer between a base element made out of glass and the light guide structure with a relatively lower refractive index, suitable pairs of refractive indices are ensured. The light guide structure may be deposited or generated on top of the cladding layer so that the adjacent materials will have a lower refractive index than the light guide structure so that coupled-in light can be transmitted without relevant losses. The cladding layer can generally at least in parts consist of a hybrid polymer.

In a further advantageous development of the invention it is provided that at least one hybrid polymer is used to generate the light guide structure. Transparency is to be regarded as the physical property of allowing light to pass through the material without being substantially scattered. This allows for a very flexible, discrete, and unobtrusive embodiment of the light guide structure. Hybrid polymers are to be understood as polymeric materials which combine structural units of different classes of materials at the molecular level. Hybrid polymers may thus have very flexible properties and can be adjusted in an optimum manner to the respective embodiment of the household appliance component. In contrast to composite materials, which are defined by phase boundaries and weak interactions between the phases, the structural units of hybrid polymers are linked at the molecular level and can comprise inorganic and organic structural elements. This may be achieved by chemical methods such as sol-gel reactions. Hybrid polymers extend the scope of classical composite materials and are the basis for a required multifunctionality of materials.

In a further advantageous development of the invention it is provided that the hybrid polymer comprises by weight:
- 1-99 % 3-glycidyloxypropyltrimethoxysilane (GLYMO)
- 0-5 % photoacid generator, in particular a triarylsulphonium salt
- 0-2 % surfactant, in particular BYK-333
- 0-70 % refractive index increasing compound, in particular SU8 and/or diphenyl dimethoxysilane
- 0-10 % additive.

A weight fraction of 1-99 % in this connection includes values of 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, and 99 % as well as respective intermediate values. The same applies correspondingly to weight fractions of 0-70 %. Correspondingly, weight fractions of 0-5 % include values of 0.0 %, 0.1 %, 0.2 %, 0.3 %, 0.4 %, 0.5 %, 0.6 %, 0.7 %, 0.8 %, 0.9 %, 1.0 %, 1.1 %, 1.2 %, 1.3 %, 1.4 %, 1.5 %, 1.6 %, 1.7 %, 1.8 %, 1.9 %, 2.0 %, 2.0 %,2.1 %,2.2 %,2.3 %,2.4 %,2.5 %,2.6 %,2.7 %,2.8 %,2.9 %,3.0 %,3.1 %,3.2 %,3.3 %,3.4 %,3.5 %,3.6 %,3.7 %,3.8 %,3.9 %,4.0 %,4.1 %,4.2 %,4.3 %,4.4 %,4.5 %,4.6 %,4.7 %,4.8 %,4.9 %, and 5.0 % as well as respective intermediate values such as for example 0.01 %, 0.02 %, 0.03 %, 0.04 %, 0.05 %, 0.06 %, 0.07 %, 0.08 %, 0.09 %, 0.10 % and so on. Weight fractions of 0 to 10% consequently may additionally include values of 2.1 %, 2.2 %, 2.3 %, 2.4 %, 2.5 %, 2.6 %, 2.7 %, 2.8 %, 2.9 %, 3.0 %, 3.1 %, 3.2 %, 3.3 %, 3.4 %, 3.5 %, 3.6 %, 3.7 %, 3.8 %, 3.9 %, 4.0 %, 4.1 %, 4.2 %, 4.3 %, 4.4 %, 4.5 %, 4.6 %, 4.7 %, 4.8 %, 4.9 %, 5.0 %, 5.1 %, 5.2 %, 5.3 %, 5.4 %, 5.5 %, 5.6 %, 5.7 %, 5.8 %, 5.9 %, 6.0 %, 6.1 %, 6.2 %, 6.3 %, 6.4 %, 6.5 %, 6.6 %, 6.7 %, 6.8 %, 6.9 %, 7.0 %, 7.1 %, 7.2 %, 7.3 %, 7.4 %, 7.5 %, 7.6 %, 7.7 %, 7.8 %, 7.9 %, 8.0 %, 8.1 %, 8.2 %, 8.3 %, 8.4 %, 8.5 %, 8.6 %, 8.7 %, 8.8 %, 8.9 %, 9.0 %, 9.1 %, 9.2 %, 9.3 %, 9.4 %, 9.5 %, 9.6 %, 9.7 %, 9.8 %, 9.9 %, or 10.0 % as well as respective intermediate values. It goes without saying that the weight fractions of all components of the hybrid polymer always add up to 100 %. The presence of the epoxy group in the GLYMO, having the formula 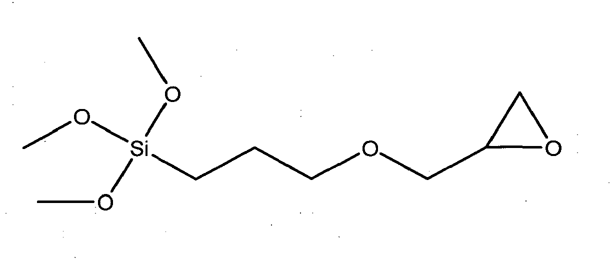 offers fast curing properties, while the silane group provides excellent adhesion properties on different base elements, especially base elements made of glass. Further, the hybrid polymer has a high resistance against extreme chemical and thermal conditions. The hybrid polymer may therefore be advantageously used in many different ways and embodiments. It can for example be used as a base ink due to its hybrid properties. By using a certain weight fraction of the photoacid generator (PAG), a curing process in one step is possible by applying UV light to the hybrid polymer mixture. In this case, the GLYMO reacts with the photoacid generator or photoinitator since acid is generated so that both processes, polymerization of the epoxy groups and hydrolysis and condensation of the silanes, are initiated at the same time. Therefore, organic/inorganic networks and coatings can be created by curing the hybrid polymer with UV light. The photoacid generator may comprise or be triarylsulphonium hexafluorophosphate salt having the formula

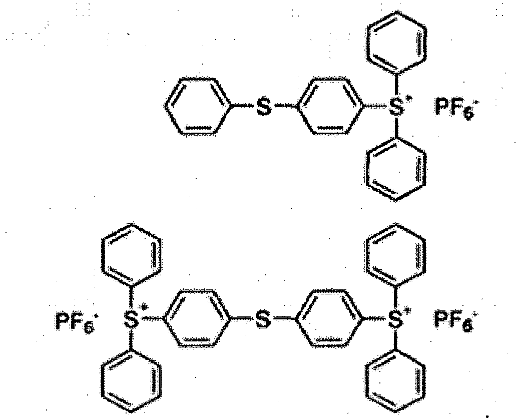

In order to adjust the rheological properties of the hybrid polymer mixture, between 0-2 %, in particular between 0.05-0.1 % of a surfactant can be used. An example of a suitable surfactant is BYK-333 (silicone-containing surface additive for surface tension reduction) from Altana AG. Other surfactants can generally be used as well. In order to increase the refractive index of the hybrid polymer, one or more refractive index increasing compounds can be added to the formulation such as for example SU8, an expoxy oligomer having the formula

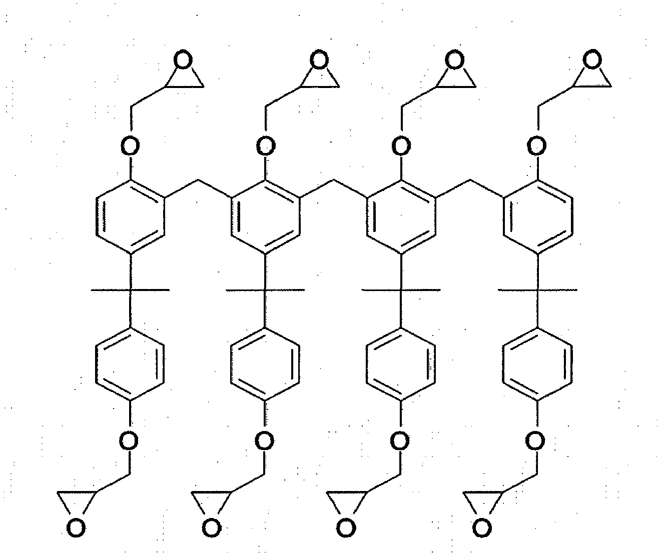

The use of SU8 helps to increase the refractive index without negative impact on the mechanical properties of the hybrid polymer. For example, the refractive index of the hybrid polymer can be adjusted between approximately 1.5 and approximately 1.57 (at 633 nm) by adding from 0% to 70% of SU8, in particular between 0-25%. Apart from SU8, also other materials such as diphenyl dimethoxysilane (DPDMS) can be used in weight fractions ranging between 0% and 70%, preferably between 0-25%, in order to adjust and increase the refractive index and, due to its inorganic component, maintain the mechanical properties of the hybrid polymer. Alternatively or additionally, other refractive index increasing compounds can be used as well. Generally speaking, the presence of ring structures and/or sulphur atoms increases the refractive index of a chemical compound so that the number of ring structures and/or sulphur atoms can be used to adjust the desired refractive index. The hybrid polymer may thus for example consist of GLYMO, SU8, DPDMS, BYK-333, and PAG. Also, depending on the particular needs, one or more additives can be added to modify the properties of the hybrid polymer. The mixture of the educts of the hybrid polymer is preferably formulated in such a way that the rheological properties of the mixture allow its deposition by inkjet printing and/or by other coating methods. Thus, the mixture of the educts or the hybrid polymer can also be denoted an ink.

In a further advantageous development of the invention it is provided that the UV-curable composition is coated with a layer thickness of at least 20 µm, in particular of at least 30 µm. Thus, comparatively thick coatings can be generated in one pass. The layer thickness of the composition or the resulting coating can for example be 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, 66 µm, 67 µm, 68 µm, 69 µm, 70 µm, 71 µm, 72 µm, 73 µm, 74 µm, 75 µm, 76 µm, 77 µm, 78 µm, 79 µm, 80 µm, 81 µm, 82 µm, 83 µm, 84 µm, 85 µm, 86 µm, 87 µm, 88 µm, 89 µm, 90 µm, 91 µm, 92 µm, 93 µm, 94 µm, 95 µm, 96 µm, 97 µm, 98 µm, 99 µm, 100 µm, 101 µm, 102 µm, 103 µm, 104 µm, 105 µm, 106 µm, 107 µm, 108 µm, 109 µm, 110 µm, 111 µm, 112 µm, 113 µm, 114 µm, 115 µm, 116 µm, 117 µm, 118 µm, 119 µm, 120 µm, 121 µm, 122 µm, 123 µm, 124 µm, 125 µm, 126 µm, 127 µm, 128 µm, 129 µm, 130 µm, 131 µm, 132 µm, 133 µm, 134 µm, 135 µm, 136 µm, 137 µm, 138 µm, 139 µm, 140 µm, 141 µm, 142 µm, 143 µm, 144 µm, 145 µm, 146 µm, 147 µm, 148 µm, 149 µm, 150 µm or more.

A first non-inventive aspect relates to a household appliance component, comprising a base element, which at least in parts comprises at least one layer made from a UV-curable composition. An improved adhesion of the layer even at high layer thicknesses is provided in that a light guide structure, which is configured to couple-in UV light into the light guide structure, transmit said UV light through the light guide structure to the layer, and couple-out said UV light to the layer, is arranged between the base element and the layer. The light guide structure is configured to couple-in UV light, transmit the UV light to the layer or coating, and release or couple out the UV light to the layer, thus ensuring a complete curing of the layer at least on the inside, i.e. directly in the interphase region "layer - base element." This makes it possible to have a very thick layer without deteriorating or worsening the layer's adhesion to the base element.

In an advantageous development it is provided that a thickness of the layer is between 20 µm and 150 µm. Thus, comparatively thick and homogeneous coatings that consist of a single layer instead of several stacked layers can be provided.

In a further advantageous development it is provided that the base element at least in parts consists of glass and/or plastic and/or stainless steel and/or aluminum. This allows a very flexible design of the household appliance component so that it can be optimally adapted to different operation purposes.

According to a further advantageous, the household appliance component is manufactured by a process according to the first aspect of the invention. The resulting features and their advantages can be gathered from the above-given description.

A second non-inventive aspect relates to a household appliance comprising at least one household appliance component, which is manufactured by a process according to the first aspect of the invention and/or configured according to the second aspect of the invention. The resulting features and their advantages can be gathered from the description of the first and second aspect of the invention.

It may further be envisaged that the household appliance is configured as a cooker, a cooking field, an oven, a microwave oven, a dishwasher, a dryer, a washing machine, a freezer, and/or a steam oven.

Further features of the invention derive from the claims as well as based on the following embodiments. The features and feature combinations mentioned above in the description as well as the features and feature combinations mentioned below in the embodiments are usable not only in the respectively specified combination, but also in other combinations without departing from the scope of the invention. There are thus also variations of the invention possible that are not explicitly shown and described in the embodiments but can be formulated through different combinations of separated features from the described embodiments. Also variations and combinations of features are possible that do not contain all the features of an originally formulated independent claim. In the following, embodiments of the invention are shown in more detail by referring to schematic drawings. These show in:
- Fig. 1: a schematic representation of a process for manufacturing a household appliance component;
- Fig. 2: a schematic top view of a base element with a light guide structure;
- Fig. 3: a schematic top view of the base element, wherein a part of the light guide structure is coated with an UV-curable composition; and
- Fig. 4: a schematic sectional view of the coated base element.

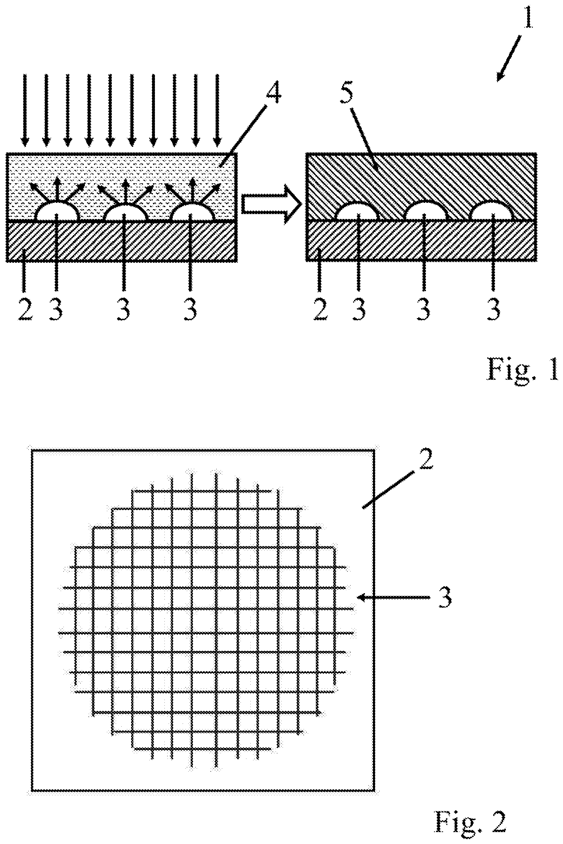

Fig. 1 shows a schematic representation of a process for manufacturing a household appliance component 1 and will be discussed in synopsis with Fig. 2 to Fig. 4. In a first step of the process, a base element 2 is provided as a substrate. The base element 2, which may for example consist of ceramic glass, is then coated with a light guiding material in order to form a light guide structure 3 on the base element 2. Since the base material 2 has a refractive index around 1.5 at 633 nm it cannot work as a light guide by itself. The coating step may be performed for example by inkjet printing or other suitable coating methods of the light guiding material. The light guiding material may also be UV-curable.

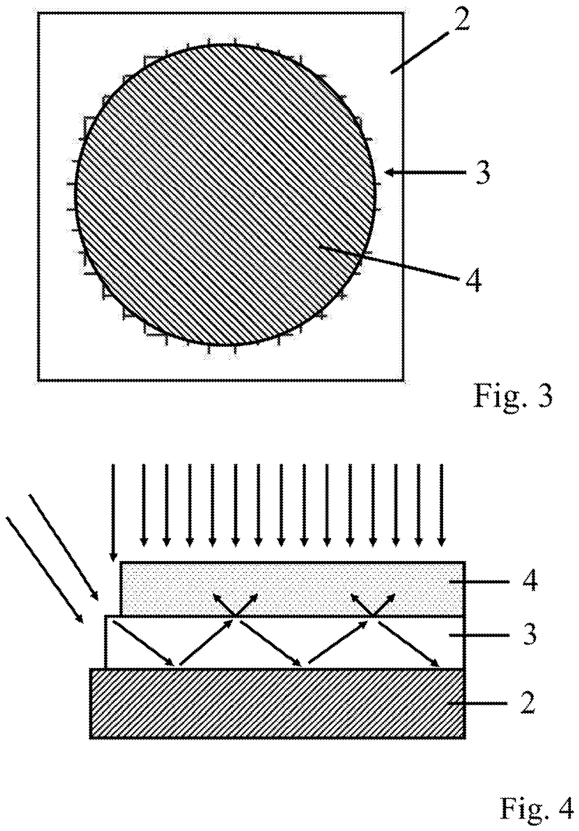

Fig. 2 shows a schematic top view of the base element 2 and the resulting light guide structure 3. In the present embodiment, the light guide structure 3 has the form of a rectangular mesh in order to ensure uniform optical properties. Other geometric designs are of course also possible. In a next step, a part of the light guide structure 3 is coated with an UV-curable composition 4. This coating step can also be performed by inkjet printing or other suitable coating methods. To further illustrate this step, Fig. 3 shows a schematic top view of the base element 2, wherein the light guide structure 3 is partly coated with the UV-curable composition 4. One recognizes that the circumferential borders of the light guide structure 3 are not coated in order to be able to couple-in UV light into the light guide structure 3.

If the light guiding material has to be UV-cured, too, this UV curing step is conducted preferably before coating of the UV-curable composition 4.

In the last step, the composition 4 is cured by coupling-in UV light into the light guide structure 3, transmitting and distributing said UV light through the light guide structure 3, and coupling-out said UV light into the composition 4. Additionally the surface of the UV-curable composition 4, which is opposite to the base material 2, is irradiated with UV light as well. The UV light path and the UV irradiation are symbolized by arrows in Fig. 1 and Fig. 4, wherein Fig. 4 shows a schematic sectional view of the coated base element 2 during this step of the process. The composition 4 is thus irradiated from the inside (bottom side) and from the outside (top side) at the same time and thus thouroughly cured to form a layer 5 with excellent adherence on the base element 2 of the household appliance component 1.

The idea of the invention therefore comprises the deposition of light guiding paths in a first step and to coat these light paths with the UV-curable composition 4. This allows to cure the composition 4 from the top but also from the bottom using UV light. Therefore the resulting layer 5 may have a very large thickness up to 100 µm or more without worsening the adhesion of the layer 5 on the base element 2.

One advantage of this process is the possibility of printing thick layers by inkjet printing or other coating techniques and curing the UV-curable composition 4 in one step instead of printing several thin layers. By reducing the number of different layers, the process time is reduced dramatically, thus increasing the efficiency of the process while lowering process costs.

In order to generate the light guide structure 3, a hybrid (organic-inorganic) polymer can be used which is mainly composed from GLYMO with 2 % of an acid photoinitiator (PAG) and optionally between 0.05 and 0.1 % of BYK-333, i. e. a silicone-containing surface additive for surface tension reduction. Depending on the specific needs, different additives could be added to modify certain properties. This material is formulated in such a way that its rheological properties allow the deposition by inkjet printing and other coating technologies. Further, the light guiding material exhibits certain advantages due to its hybrid properties. The presence of the epoxy groups in the GLYMO guarantees fast curing properties, while the silane groups provide excellent adhesion in particular on glass substrates. Further, this hybrid polymer has a high thermal and chemical stability.

In order to increase the refractive index of this material (base ink), additional compounds can be added to the formulation such as SU8. The addition of this compound in weight fractions of between 1 % to 25 % to the base ink helps increasing the refractive index without adversely affecting the mechanical properties of the coating composition 4. Besides SU8, also other materials such as diphenyl dimethoxysilane (DPDMS) could also be used to increase the refractive index while maintaining the mechanical properties of the coating composition 4.

It will be understood by those skilled in the art that while the present invention has been disclosed above with reference to preferred embodiments, various modifications, changes and additions can be made to the foregoing invention, which is defined in the claims. The parameter values used in the claims and the description for defining process and measurement conditions for the characterization of specific properties of the invention are also encompassed within the scope of deviations, for example due to measurement errors, system errors, weighing errors, DIN tolerances and the like.

### LIST OF REFERENCES

- 1: household appliance component
- 2: base element
- 3: light guide structure
- 4: UV-curable composition
- 5: layer

## Claims

1. A process for manufacturing a household appliance component (1), comprising the steps of:
- providing a base element (2);
- generating a light guide structure (3) on the base element (2);
- coating at least a part of the light guide structure (3) with an UV-curable composition (4); and
- at least partially curing the composition (4) by coupling-in UV light into the light guide structure (3), transmitting said UV light through the light guide structure (3) to the composition, and coupling-out said UV light into the composition (4).

2. The process according to claim 1, wherein the light guide structure (3) and/or the UV-curable composition (4) are deposited by at least one coating method on the base element (2), in particular by at least one of spin coating, spray coating, dip coating, serigraphy, and inkjet printing.

3. The process according to claim 1 or 2, wherein the light guide structure (3) is generated in the form of a mesh on the base element (2).

4. The process according to any one of claims 1 to 3, wherein UV light is coupled into at least two or more locations of the light guide structure (3), in particular into two or more locations spaced around a circumference of the light guide structure (3).

5. The process according to any one of claims 1 to 4, wherein a surface of the UV-curable composition (4), which is opposite to the base material (2), is irradiated with UV light.

6. The process according to any one of claims 1 to 5, wherein the light guide structure (3) has a higher refractive index than the base element (2) and/or wherein the light guide structure (3) is at least partly arranged on a cladding layer and/or at least partly arranged between two cladding layers and/or at least partly embedded in the cladding layer.

7. The process according to any one of claims 1 to 6, wherein at least one hybrid polymer is used to generate the light guide structure (3).

8. The process according to claim 7, wherein the hybrid polymer comprises by weight:
- 1-99 % 3-glycidyloxypropyltrimethoxysilane
- 0-5 % photoacid generator, in particular a triarylsulphonium salt
- 0-2 % surfactant, in particular BYK-333
- 0-70 % refractive index increasing compound, in particular SU8 and/or diphenyl dimethoxysilane
- 0-10 % additive.

9. The process according to any one of claims 1 to 8, wherein the UV-curable composition (4) is coated with a layer thickness of at least 20 µm, in particular of at least 30 µm.

## Patentansprüche

1. Verfahren zum Herstellen einer Haushaltsgerätekomponente (1), das folgende Schritte umfasst:
- Bereitstellen eines Grundelements (2),
- Erzeugen einer Lichtleiterkonstruktion (3) auf dem Grundelement (2),
- Beschichten zumindest eines Teils der Lichtleiterkonstruktion (3) mit einer UV-härtbaren Zusammensetzung (4) und
- zumindest teilweises Aushärten der Zusammensetzung (4) durch Einkoppeln von UV-Licht in die Lichtleiterkonstruktion (3), Leiten des UV-Lichts durch die Lichtleiterkonstruktion (3) zu der Zusammensetzung hin und Auskoppeln des UV-Lichts in die Zusammensetzung (4).

2. Verfahren nach Anspruch 1, wobei die Lichtleiterkonstruktion (3) und/oder die UV-härtbare Zusammensetzung (4) durch mindestens ein Beschichtungsverfahren, insbesondere durch Rotationsbeschichtung, Spritzbeschichtung, Tauchbeschichtung, Siebdruck und/oder Tintenstrahldruck, auf dem Grundelement (2) abgeschieden werden.

3. Verfahren nach Anspruch 1 oder 2, wobei die Lichtleiterkonstruktion (3) in Form eines Gitters auf dem Grundelement (2) ausgebildet wird.

4. Verfahren nach einem der Ansprüche 1 bis 3, wobei UV-Licht an mindestens zwei oder mehr Stellen an der Lichtleiterkonstruktion (3), insbesondere zwei oder mehr um einen Umfang der Lichtleiterkonstruktion (3) herum beabstandeten Stellen eingekoppelt wird.

5. Verfahren nach einem der Ansprüche 1 bis 4, wobei eine Oberfläche der UV-härtbaren Zusammensetzung (4), die dem Grundmaterial (2) gegenüberliegt, mit UV-Licht bestrahlt wird.

6. Verfahren nach einem der Ansprüche 1 bis 5, wobei die Lichtleiterkonstruktion (3) einen höheren Brechungsindex aufweist als das Grundelement (2) und/oder die Lichtleiterkonstruktion (3) zumindest teilweise an einer Mantelschicht und/oder zwischen zwei Mantelschichten angeordnet und/oder zumindest teilweise in die Mantelschicht eingebettet ist.

7. Verfahren nach einem der Ansprüche 1 bis 6, wobei zum Erzeugen der Lichtleiterkonstruktion (3) mindestens ein Hybridpolymer benutzt wird.

8. Verfahren nach Anspruch 7, wobei das Hybridpolymer nach Gewicht:
- 1-99% (3-Glycidyloxypropyl)trimethoxysilan,
- 0-5% Photosäuregenerator, insbesondere ein Triarylsulfoniumsalz,
- 0-2% Tensid, insbesondere BYK-333,
- 0-70% den Brechungsindex erhöhende Verbindung, insbesondere SU8 und/oder Diphenyldimethoxysilan,
- 0-10% Zusatzmittel enthält.

9. Verfahren nach einem der Ansprüche 1 bis 8, wobei die UV-härtbare Zusammensetzung (4) mit einer Schichtdicke von mindestens 20 µm, insbesondere mindestens 30 µm aufgebracht wird.

## Revendications

1. Procédé de fabrication d'un composant d'appareil ménagé (1) comprenant les étapes suivantes :
- fourniture d'un élément de base (2) ;
- production d'une structure de guide de lumière (3) sur l'élément de base (2) :
- revêtement d'au moins une partie de la structure de guide de lumière (3) avec une composition durcissant aux UV (4) ; et
- durcissement au moins partiel de la composition (4) par couplage de la lumière UV dans la structure de guide de lumière (3), transmission de ladite lumière UV à travers la structure de guide de lumière (3) vers la composition et découplage de ladite lumière UV dans la composition (4).

2. Procédé selon la revendication 1, dans lequel la structure de guide de lumière (3) et/ou la composition durcissant aux UV (4) sont déposées par au moins un procédé de revêtement sur l'élément de base (2), en particulier par au moins un parmi le revêtement à la tournette, le revêtement par pulvérisation, le revêtement par immersion, la sérigraphie et l'impression par jet d'encre.

3. Procédé selon la revendication 1 ou 2, dans lequel la structure de guide de lumière (3) est produite sous forme d'un maillage sur l'élément de base (2).

4. Procédé selon l'une quelconque des revendications 1 à 3, dans lequel la lumière UV est couplée dans au moins deux endroits ou plus de la structure de guide de lumière (3), en particulier deux endroits ou plus espacés sur la circonférence de la structure de guide de lumière (3).

5. Procédé selon l'une quelconque des revendications 1 à 4, dans lequel la surface de la composition durcissant aux UV (4), laquelle est vis-à-vis de la matière de base (2), est irradiée avec de la lumière UV.

6. Procédé selon l'une quelconque des revendications 1 à 5, dans lequel la structure de guide de lumière (3) présente un indice de réfraction plus élevé que l'élément de base (2) et/ou dans lequel la structure de guide de lumière (3) est au moins partiellement disposée sur une couche de gainage et/ou au moins partiellement disposée entre deux couches de gainage et/ou au moins partiellement noyée dans la couche de gainage.

7. Procédé selon l'une quelconque des revendications 1 à 6, dans lequel au moins un polymère hybride est utilisé pour générer la structure de guide de lumière (3).

8. Procédé selon la revendication 7, dans lequel le polymère hybride comprend, en poids :
- 1-99% de 3-glycidyloxypropyltriméthoxysilane
- 0-5% d'un générateur de photoacide, en particulier un sel de triarylsulfonium
- 0-2% d'un surfactant, en particulier le BYK-333
- 0-70% d'un composé augmentant l'indice de réfraction, en particulier le SU8 et/ou le biphényldiméthoxysilane
- 0-10% d'additif.

9. Procédé selon l'une quelconque des revendications 1 à 8,
dans lequel la composition durcissant aux UV (4) est revêtue avec une épaisseur de couche d'au moins 20 µm, en particulier d'au moins 30 µm.
